# EUROPEAN PATENT APPLICATION

(11) **EP 2 821 371 A1**
(43) Date of publication of application: **07.01.2015**
(21) Application number: 14173140.6
(22) Date of filing: 19.06.2014
(51) Int. Cl.: C02F 1/78

(54) **A plant for purifying wastewater**

(30) Priority: 04.07.2013 SE 1350837
(71) Applicant: BAGA Water Technology AB, 371 48 Karlskrona (SE)
(72) Inventor: Gustaffson, Bert, 37045 FÅGELMARA (SE)
(74) Representative: Ström & Gulliksson AB

(57) **Abstract**

A wastewater purification plant comprises a container (1) with means (3-5) for transferring wastewater from an inlet tube (6) to an outlet tube (10) in such a way, that sludge and other particulate contaminants are separated out and collected at the bottom of the container (1), and means (15-18) for adding flocculation agent flow-proportionally to the wastewater before said separation. It also comprises means (24-26) for adding ozone to the water before it reaches the outlet tube (10) and by a separate ozone treatment tank (22) in the container (1), in which tank the ozone is allowed to treat the water with its then remaining contaminants for a certain time and in a controlled amount.

## Description

### Technical Field

The present invention relates to a wastewater purification plant, comprising a container with means for transferring wastewater from an inlet tube to an outlet tube in such a way, that sludge and other particulate contaminants are separated out and collected at the bottom of the container, and means for adding flocculation agent flow-proportionally to the wastewater before said separation.

### Background of the Invention

A wastewater purification plant of the above type is disclosed in EP 2 040 812, which constitutes a development of the plant shown in EP 1 128 885.

The latter is an advantageous plant of three-chamber type for mechanical separation of sludge, sediments and other particulate contaminants, which gather at the bottom of the plant and can be removed at intervals.

Such a plant is normally intended for use by one or a few households and is dimensioned accordingly. A normal wastewater production for a household is 800-1000 liters per 24 hours, and the container of the plant may have a total volume in the order of say 3000 liters.

The development disclosed in EP 2 040 812 is the addition of flocculation agent flow-proportionally to the wastewater for accomplishing a chemical purification.

Due to favorable conditions in the plant remarkably good purification results are obtained with regard to parameters, which are of importance also for authority demands. In fact, the results for some parameters are very close to authority demands for allowing the purified wastewater to be out in nature without further purification. However, the use of devices for further purification can still possibly be recommended.

It is to be noted that the invention is not to be limited to a plant as disclosed in EP 2 040 812, which is thus only to be seen as one example of a plant in which the invention may be embodied. It is also to be noted that dimensions and the like are only to be seen as non-limiting examples.

The main object of the invention is to further improve the wastewater purification in a plant of the type defined above and to fulfill authority demands, so that wastewater treated in the plant may be let out in nature.

### The Invention

This is attained in that a plant according to the invention comprises means for adding ozone to the water before it reaches the outlet tube and a separate ozone treatment tank in the container, in which tank the ozone is allowed to treat the water with its then remaining contaminants for a certain time and in a controlled amount.

Preferably, the plant comprises a recirculation pump for pumping water, from which sludge and other particulate contaminants have been separated out, through a recirculation tube to the ozone treatment tank and an ozone generator with an air pump for delivering a dry air/ozone mixture through an ozone line to an injector in the recirculation tube.

A mixer for the water/air/ozone mixture is preferably arranged in the recirculation tube downstream of the injector.

The recirculation tube preferably opens at the bottom of the ozone treatment tank.

A diffuser may be arranged in the ozone treatment tank above the opening of the recirculation tube therein.

In practice, the recirculation pump may have a capacity of 12-15 l/min, the ozone treatment tank a volume of 110-150 1, and the ozone generator a production capacity up to about 10 g/h.

Preferably, the recirculation pump and the ozone generator are operated at least 4 hours after each operation of a pump for pumping out treated wastewater from the container through the outlet tube.

### Brief Description of the Drawings

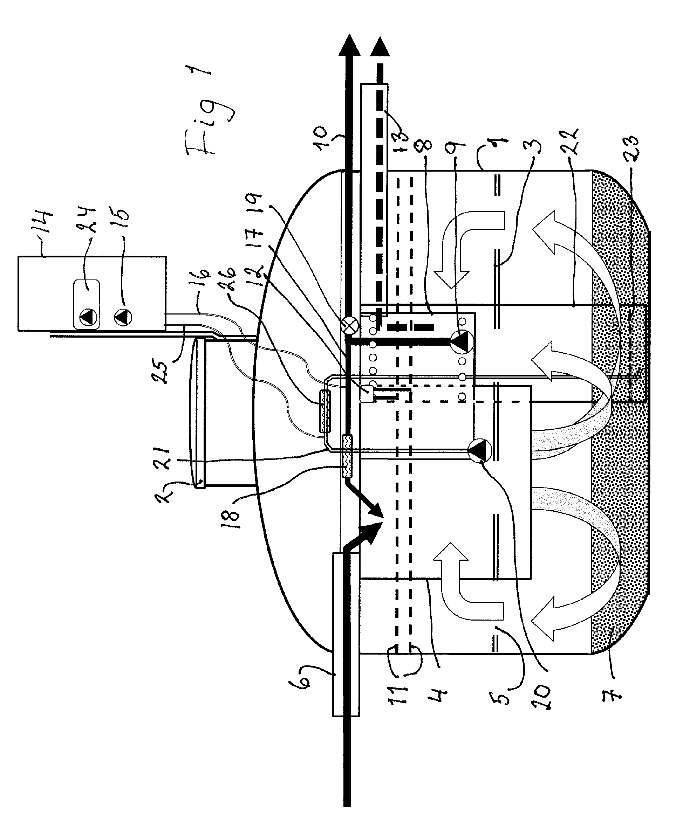

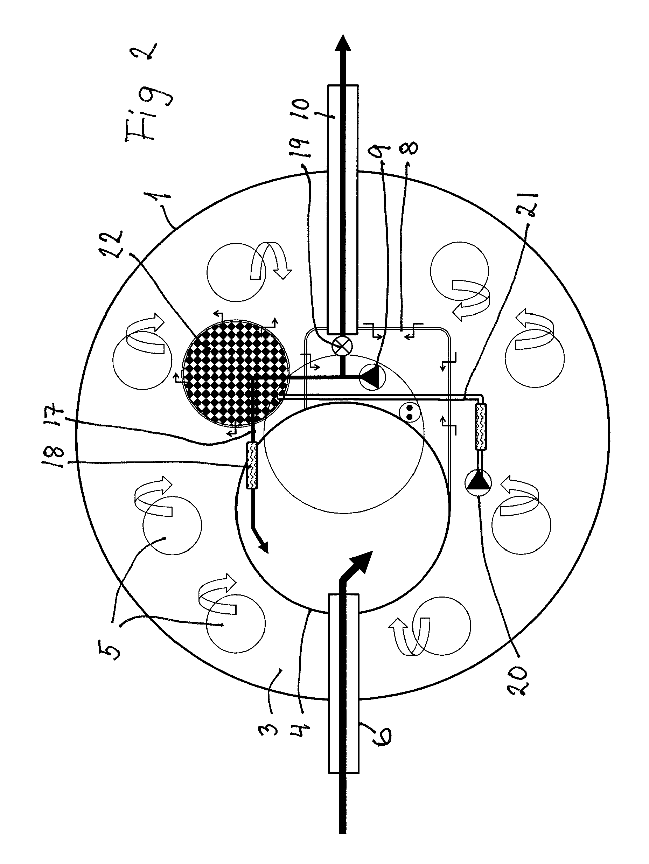

The invention will be described in further detail below under reference to the accompanying drawings, in which Fig 1 is a side view, mainly in section, of a wastewater purification plant according to the invention and Fig 2 is a top view, also mainly in section, of the plant according to Fig 1.

### Detailed Description of Embodiments

A wastewater purification plant according to the invention is housed in a vessel or container 1. The container may be generally cylindrical and manufactured in a plastic material. It may wholly or partly be placed in the ground. At the top it may be provided with a service cover 2.

Only as a non-limiting example, the container 1 mainly intended for one household may have a diameter of 2 m and roughly the same height. The wastewater volume thereof can be about 30001.

The container is internally provided with a distribution insert consisting of a horizontal distribution disc 3, attached to the container 1 and provided with a vertical inlet cylinder 4 with a through hole. The distribution disc 3 is provided with a number of openings 5 having a shape and size for accomplishing a desired flow through the distribution disc.

Wastewater is introduced into the inlet cylinder 4 through an inlet tube 6, preferably at an angle for forming a circular flow in the inlet cylinder 4. The water flows slowly down towards the bottom of the container 1, where sludge and other particulate contaminants are collected and form a sludge bed 7. The water then flows upwards through the openings 5 in the distribution disc 3, as indicated by arrows in the drawings.

The device described so far corresponds to a classical septic tank with three chambers, a first chamber in the inlet cylinder 4 and in the lower part of the container 1 up to the level of the lower end of the inlet cylinder 4, a second chamber in the container from this level up to the distribution disc 3, and a third chamber above the distribution disc.

Attached to the inlet cylinder 4 above the distribution disc 3 is a pump compartment 8, which is provided with circumferential bottom holes, so that water may circulate into the pump compartment.

Towards its bottom the pump compartment 8 is provided with an electrically driven pump 9, which has the main purpose to pump out treated wastewater from the container 1 to a suitable recipient through an outlet tube 10.

Suitable highest and lowest water levels in the container 1 are indicated with dashed lines 11 in Fig 1. A level regulator 12 is provided for controlling the pump 9. The distance between the two levels may be 5-6 cm, which equals about 150 1 water.

For the case that the water level in the container 1 becomes too high, there is also an overflow tube 13.

In a separate cabinet 14 there is provided a stock of flocculation agent, supplied by an electrical dosing pump 15 via a line 16 through an injector to a flocculation agent tube 17, connected to the outlet tube 10 and opening into the inlet cylinder 4. The tube 17 is preferably provided with a mixer 18 after the flocculation agent injector.

The flocculation agent may normally be polyaluminum chloride, but alternatively iron chloride may be used.

The outlet tube 10 is preferably provided with a flow valve 19 to control the flow distribution to the outlet tube 10 and the flocculation agent tube 17.

Starting from the situation, when the container 1 is being filled with wastewater, the water level will eventually reach the level of the upper dashed line 11 in Fig 1, so that the level regulator 12 will effect a start-up of the pump 9. At the same time the dosing pump 15 for flocculation agent is started. As the flow valve 19 is adjusted to recirculate some 30-40 % of the partly sludge-removed water back to the inlet cylinder 4, at the same time as flocculation agent is added and is mixed into the recirculated water, there will be provided a flow-proportional mixing-in of the flocculation agent, as always the same volume of sedimented and treated wastewater is transported away to a recipient at each operating period for the pump 9, which ceases to pump, when the level has gone down to the lower dashed line 11 in Fig 1.

A normal household produces some 800-1000 liter wastewater per 24 hours with a content of certain matters of importance for an assessment of the wastewater quality as yearly average normally as follows:

| | |
|---|---|
| BOD7 | about 300 mg/l |
| CODcr | about 600 mg/l |
| Ptot | about 12 mg/l |
| Ntot | about 80 mg/l |
| SS | about 400 mg/l |

where BOD7 is the Biochemical Oxygen Demand for 7 days,
COD is the Chemical Oxygen Demand,
Ptot is the total amount of phosphor,
Ntot is the total amount of nitrogen, and
SS stands for Suspended Solids.

Tests show that the contents of the defined matters in the wastewater in the compartment above the distribution disc 5 are reduced to the following after the treatment as described above:

| | |
|---|---|
| BOD7 | about 40-50 mg/l |
| CODcr | about 100-120 mg/l |
| Ptot | about 1.0-1.2 mg/l |
| Ntot | about 65-70 mg/l |
| SS | about 30-40 mg/l |

These contents are in instances close to limit values set by authorities for allowing the treated water to be let out in nature.

However, according to the invention it has been found that remaining contaminants may be further reduced by ozone supplied in the following way:

An electrically driven recirculation pump 20 is arranged above the distribution disc 3. By this pump 20, water is recirculated through a recirculation tube 21 to the bottom of an ozone treatment tank 22. This tank 22 can be arranged standing on the bottom of the container 1, and a flow diffuser 23 is preferably arranged in the tank 22 above the level for the opening of the recirculation tube 21. Water may then leave the tank 22 through circumferential holes towards its upper end in an amount corresponding to the inflow through the recirculation tube 21.

The capacity of the recirculation pump 20 may preferably be in the order of 8-10 l/min, whereas the ozone treatment tank 22 may have a volume of 110-150 1.

In the cabinet 14 there is arranged an ozone generator 24 with an air pump, so that the ozone is mixed with dry air. The ozone is delivered through an ozone line 25 to an injector in the recirculation tube 21. There is also a mixer 26 in the recirculation tube 21 downstream of the injector.

As the main purpose of the wastewater purification plant according to the invention is to purify wastewater on a household level, it is of certain importance that the ozone generator is not too complex and expensive. Accordingly, the ozone generator used in the present instance employs the common corona discharge method. The ozone production capacity may be in the order of up to 10 g/h, which with other chosen parameters means that the water in the ozone treatment tank 22 can be treated with 20 mg/l ozone.

Remaining contaminants are thus reduced in the compartment above the distribution disc 3 by adding ozone in such a way that the recirculation pump 20 and the ozone generator 24 always operate at least 4 hours after each operation of the pump 9. Depending on the capacity and setting of the ozone generator, a suitable and controlled amount of ozone may in this way be added and reduce the remaining contaminants. By the recirculation and the volume of the compartment above the distribution disc 3 as well as the residence time in the ozone treatment tank 22 it may be avoided that water with remaining, non-oxidized ozone can get in contact with the wastewater in the compartment below the distribution disc 3 and the sludge bed 7 and in that way hurt the bacteria culture in the sludge bed, which would negatively affect the denitrification of remaining N-fractions.

The wastewater leaving the plant according to the invention after ozone treatment may per 1000 l have the following contents of the defined matters: approximately 50 g COD (including BOD7), < 1 g phosphor, and < 80 g nitrogen (Ntot). This is well under authority limit values.

Modifications are possible within the scope of the invention.

## Claims

1. A wastewater purification plant, comprising a container (1) with an inlet tube (6), a vertical inlet cylinder (4) with a through hole to receive water from the inlet tube (6) and a horizontal distribution disc (3) between the container (1) and the inlet cylinder (4), which distribution disc (3) divides the container (1) vertically and have openings (5) for the water, so that sludge and other particulate contaminants are separated out and collected at the bottom of the container (1), and means (15-18) for adding flocculation agent flow-proportionally to the wastewater before said separation, **characterized by** a recirculation pump (20) above the distribution disc (3) for pumping wastewater to a separate ozone treatment tank (22) and by means (24-26) for adding ozone to the water, in which ozone treatment tank (22) the ozone is allowed to treat the water for a certain time and in a controlled amount.

2. The plant according to claim 1, wherein an injector in a recirculation tube (21) from the recirculation pump (20) to the ozone treatment tank (22) is arranged to receive a dry air/ozone mixture from an ozone generator (24) with an air pump.

3. The plant according to claim 2, wherein a mixer (26) for a water/air/ozone-mixture is arranged in the recirculation tube (21) downstream of the injector.

4. The plant according to claim 2, wherein the recirculation tube (21) opens at the bottom of the ozone treatment tank (22).

5. The plant according to claim 4, wherein a diffuser (23) is arranged in the ozone treatment tank (22) above the opening of the recirculation tube (21) therein.

6. The plant according to claim 1, wherein the recirculation pump (20) has a capacity of 12-15 l/min, the ozone treatment tank (22) has a volume of 110-1501, and the ozone generator (24) has a production capacity up to about 10 g/h.

7. The plant according to claim 6, wherein the recirculation pump (20) and the ozone generator (24) are operated at least 4 hours after each operation of a pump (9) for pumping out treated wastewater from the container (1) through an outlet tube (10).
